# EUROPEAN PATENT SPECIFICATION

(11) **EP 1 296 584 B1**
(45) Date of publication and mention of the grant of the patent: **31.03.2004**
(21) Application number: 01945481.8
(22) Date of filing: 28.06.2001
(51) Int. Cl.: A47J 31/40, A47J 31/44, A47J 31/00

(54) **BEVERAGE DISPENSER**
GETRÄNKESPENDER
DISTRIBUTEUR DE BOISSON

(30) Priority: 03.07.2000 GB 0016313
(43) Date of publication of application: 02.04.2003
(73) Proprietor: Dass Manufacturing Ltd, Wallington, Surrey SM6 7AH (GB)
(72) Inventor: ANDREWS, David Ronald, Surrey CM5 3LS (GB)
(74) Representative: Howe, Steven
(86) International application number: PCT/GB2001/002892
(87) International publication number: WO 2002/001993

(56) References cited:
- GB-A- 1 426 145
- US-A- 3 641 918
- US-A- 6 073 539

## Description

The present invention relates to a beverage dispenser, and in particular to a dispenser for hot beverages such as coffee that is suited to being mounted on a bar or counter.

Hot beverage dispensing systems are known. These include systems in which a large volume of the beverage is produced and stored for dispensing, and systems in which the beverage is produced as required by mixing hot water or other liquid with either dry ingredients or liquid concentrate to produce the beverage. Systems in which the beverage is produced freshly are preferable where the demand is inconsistent or where high quality beverages are required, since in these systems the beverage is freshly produced to order and does not have a chance to go stale.

In the case of beverage dispensing systems in which the beverage is produced from dry ingredients, the dry ingredients are dropped from a hopper into a mixing chamber or directly into the receptacle from which the beverage is to be consumed. Hot water is fed, usually through a valve by gravity, into the mixing chamber or receptacle where the dry ingredients are dissolved to produce the beverage.

For systems where the beverage is produced by diluting a liquid concentrate with hot water, the liquid concentrate is usually stored in a cooled chamber, typically at a temperature of about 6°C. This low temperature is required to maintain the quality of the liquid concentrate to produce high quality beverages. The concentrate is usually provided in a can that is provided in the cooled chamber. In use, a volume of liquid concentrate is pumped from the chamber into a mixing chamber. Hot water is added to the mixing chamber through a valve by gravity feed. The hot water and liquid concentrate are mixed in the mixing chamber, and the beverage is dispensed from the mixing chamber, by gravity, into a waiting beverage receptacle.

Such a system is disclosed in US-A-3 641 918.

Such beverage dispensing systems are large as a result of the inclusion of a hopper for dry ingredients or a cooled chamber for liquid concentrate, and a hot water tank, which supply the ingredients for the production of the beverage to a mixing chamber which dispenses the produced beverage into a waiting beverage receptacle. Therefore, these systems are used in, for example, office kitchens and cafeterias where there is sufficient room for the apparatus, and where there is a demand for production of beverages.

Recently, there has been an increasing commercial interest and a customer demand in pubs, clubs, wine bars and similar establishments for the provision of hot beverages in addition to the cold alcoholic and non-alcoholic beverages previously sold. One reason for the desire to serve hot beverages, such as coffee, is the relatively high profit margin associated with such beverages when compared to other beverages, such as beer. However, conventional beverage dispensing systems are not well suited to such environments. In particular, the large size required for conventional apparatus means that it is often impractical to provide these on a bar or counter. This is due both to the large footprint of the known systems which reduces the available space on the bar or counter, and their large height which prevents bar staff seeing customers over the top of the apparatus. Accordingly, where such systems are used in bars and similar establishments, it is usual for the apparatus to be provided away from the bar, either on a wall or counter behind the bar or in a different location entirely. This is not desirable. The positioning of a hot beverage dispenser away from the bar may pose a security risk, both as the bar staff may not be able to properly monitor the drinks dispenser whilst serving at the bar, and as the staff cannot monitor the bar properly when dispensing hot beverages away from the bar. There is a risk of theft when either the drinks dispenser or bar are not monitored. Further, the availability of hot beverages may not be apparent to customers where the dispensing apparatus cannot easily be seen.

It has been proposed that hot beverages may be produced and then dispensed through a hand-held dispenser, connected to the beverage supply through a flexible tube. Such systems do not require such a large area or a bar or counter, but do have a number of potential problems. In particular, there is a potential danger in dispensing hot beverages through a hand-held dispenser in that the hot beverage may accidentally contact a customer's or staffs skin causing injury. Further, especially where large volumes of beverage are not being dispensed, the beverage may become stale or cold. This leads either to beverages of an unacceptable quality being dispensed, or to wastage.

According to the present invention, a beverage dispensing apparatus comprises a dispenser unit arranged to be mounted on a surface, a source of hot water remote from the dispenser unit for supplying hot water to the dispenser unit, and a source of liquid concentrate remote from the dispenser unit for supplying liquid concentrate to the dispenser unit, in which hot water and liquid concentrate are supplied to the dispenser unit and are mixed in the dispenser unit to produce a beverage, the beverage being dispensed from the dispenser unit.

With the arrangement according to the present invention, only the dispenser unit needs to be provided on the bar, counter or other surface, with the hot water tank and source of liquid concentrate being provided remote from the dispenser unit. This means that the size of the unit that is provided on the bar or counter is much smaller than for conventional systems, and therefore makes it possible to provide the dispenser on the bar. This gives various advantages over conventional systems, including improved security and improved awareness by customers of the availability of hot beverages. Also, by providing a dispenser unit that is mounted on the bar or counter, there is a reduced risk of causing injury to customers or staff from hot liquids.

A further advantage of the present invention is that the beverage is produced at the point of dispense, by supplying the liquid concentrate and hot water separately. This ensures that the beverage is of optimum quality when dispensed, and is not stale or cold.

Preferably, the water in the dispenser unit is maintained at the desired temperature for production of the beverage. This may be achieved by providing a heating element in the dispenser to re-heat the water. Preferably however, water is circulated through the dispenser unit from the source of hot water, thereby providing a supply of hot water at the desired temperature to the dispenser unit. A by-pass valve is preferably provided to control the recirculation of hot water through the dispenser unit. In this case, it is preferred that a restriction is provided in the return line from the dispenser unit to the source of heated water. This ensures that the water in the dispenser unit is maintained at a high pressure to assist dispensing. Preferably, the restriction is adjustable to control the pressure in the system.

It is preferred that the dispenser unit includes a plurality of hot water outlets or nozzles. Preferably, at least one of these is provided to discharge hot water into a mixing chamber where the water is mixed with the liquid concentrate to produce the beverage. Preferably, at least one other of the plurality of outlets or nozzles is provided to dispense hot water directly, by-passing the mixing chamber. This is of benefit where hot water is required, for example for making tea.

Advantageously, the temperature of the source of hot water can be controlled such that the water delivered to the dispensing unit is at a predetermined, desired, temperature. This may be achieved by the provision of a temperature sensor or thermostat in the source of hot water that controls a heater that heats the water. The required temperature of the source of hot water will depend on the length of the line to the dispenser unit and the ambient conditions.

To maintain the quality of the beverages produced, it is preferred that the liquid concentrate is maintained at a low temperature, preferable at about 6°C. This may be achieved by the provision of a cooling device, such as a Peltier cooler device.

The delivery of liquid concentrate is preferably achieved using a pump, such as a peristaltic pump. Advantageously, the pump or other means for supplying liquid concentrate to the dispenser unit is controlled to control the volume of liquid concentrate supplied to the dispenser unit. Preferably, the amount of liquid concentrate supplied is controllable by an operator, for example by input through a keypad. The amount of liquid concentrate will affect the strength of the beverage produced.

It is preferred that a number of different liquid concentrates are provided, any one of which can be supplied to the dispenser unit in response to an operator request, for example by input using a keypad or by actuation of a particular switch. In this way, the system is able to produce a number of different types of beverage. In this case, the different sources of liquid concentrate may be provided in a single cooled chamber, or may be provided in separate chambers.

The liquid concentrate may be a coffee concentrate, or may be a concentrate for other hot beverages such as tea, hot chocolate or soup.

Other liquid or solid additives may be added to the beverage, either by addition to the mixing chamber of the dispenser unit, or directly into the receptacle into which the beverage is dispensed. These additives may include milk, for example to produce a cappuccino drink or whisky for an Irish coffee.

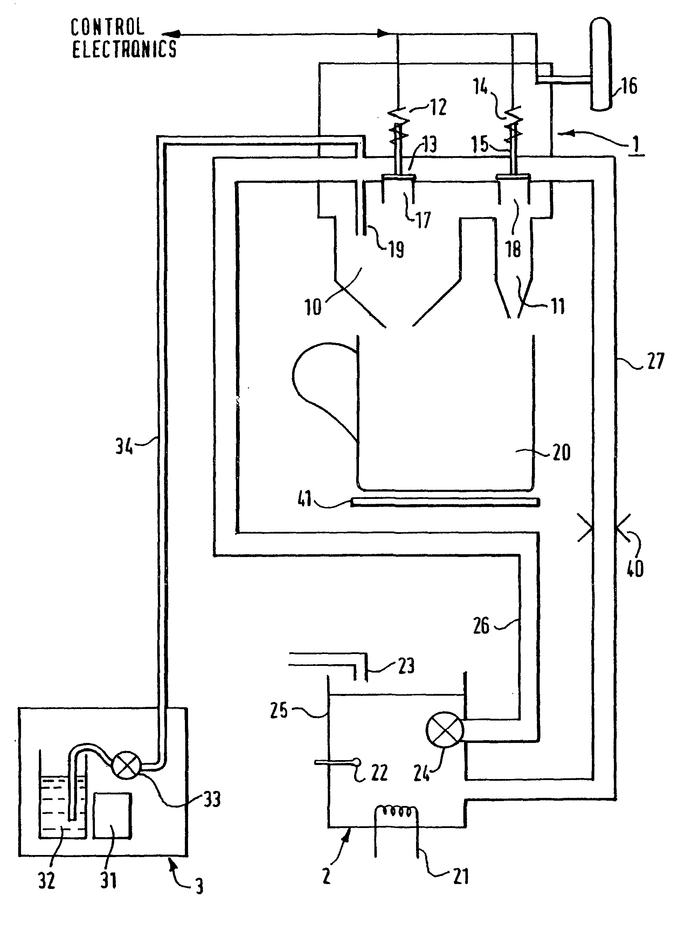

An example of a beverage dispensing system according to the present invention will now be described with reference to the accompanying drawing, which shows a schematic view of a beverage dispensing system.

The apparatus includes three main components: the dispenser unit 1, the water heater 2 and the liquid concentrate refrigeration unit 3.

The dispenser unit 1 is provided as a unit that can be mounted on a surface such as a bar or counter. Although not shown, the mounting can be by a bracket or clamp, or may be in the form of a flange that can be bolted or otherwise connected to the surface. The dispenser unit may include a display indicating, for example, the beverages that are available, or the supplier of the beverages that may be dispensed. Switches, for example levers 16 and optionally push buttons or a keypad are provided for selection of a beverage, selection of the strength of beverage and/or initiation of dispensing. The dispenser unit includes one or more outlet nozzles 10, 11 through which beverage or hot water are dispensed. The dispensed liquid is dispensable into a cup or other beverage container 20 that may be held below the nozzles 10, 11 or may stand on a support 41. The position of the support 41 is adjustable to accommodate cups 20 of different size.

The water heater 2 comprises a tank 25 into which water is introduced through an inlet pipe 23. The tank 25 is open to the atmosphere. A heater 21 is provided in the tank 25 to heat the water to a desired temperature. A temperature sensor 22, such as a capillary type thermostat detects the temperature of the water in the tank 25. This controls the heater 21 to maintain the water in the tank 25 at the desired temperature. A pump 24 is provided to pump hot water from the tank 25 to the dispenser unit 1 through a pipe 26. The pipe 26 leads to two bypass valves 13, 15 in the dispenser unit 1, and from here leads along pipe 27 back to the tank 25. The return pipe 27 includes an adjustable clamp 40 or other restriction means for controlling the flow of water along the return pipe 27 to the tank 25. This allows a high pressure to be maintained at the valves 13, 15.

The recirculation path from the water heater 2 to the dispenser unit 1 and back to the water heater 2 allows hot water to recirculate, thereby maintaining water at a desired temperature to be continually provided to the dispenser unit 1. Whilst the hot water may continually be circulated around the recirculation path, it is preferable for the pump 24 to periodically circulate water through the path, thereby providing fresh hot water to the dispenser unit 1, but using less energy due to the periodic recycling of water rather than requiring the pump to be operated continually. The pump 24 may circulate water every 15 to 20 seconds. The pump 24 and heater 21 must be capable of pumping and heating the required volume of water for the dispensing application. In a typical example, the pump 24 may be capable of pumping hot water at a rate of 4 litres/minute.

The temperature to which the water in the tank 25 is heated is controlled depending on the operating conditions of the apparatus. In particular, the temperature of the water in the tank 25 is controlled such that the water supplied to the dispenser unit 1 is at the temperature required for production of the beverage. Therefore, where the pipe 26 from the water heater 2 to the dispenser unit 1 is long, or where this passes through a cold environment, the temperature of the water in the tank 1 is higher than where the pipe 26 is short and passes through a warmer environment. For example, where the water heater 2 is provided in a cool cellar and the heated water needs to pass through a long pipe 26 through the cold cellar, the water in the tank may be heated to a high temperature of 98°C. When the water heater 2 is provided below a bar on which the dispenser unit 1 is mounted, the water may be heated to a lower temperature, for example 93°C. In either case, the water will be delivered to the delivery unit 1 at the desired temperature.

The valves 13, 15 are solenoid controlled, ganged valves. Accordingly, in normal operation, the valves 13, 15 close the outlets 17, 18 such that water passes along the recirculation path. In response to a control signal, one or other of the solenoids 12, 14 are energised, lifting the valve 13, 15 respectively from the valve seat 17, 18, allowing the hot water passing along pipe 26 to pass into the mixing chamber or outlet nozzle 10, 11. The control signal to energise one or other of the solenoids 12, 14 is generated from control electronics (not shown) in response to the actuation of a switch by a user, for example by pulling a lever 16.

The refrigeration unit 3 is also provided remote from the dispenser unit 1. The refrigeration unit 3 includes a cooling means 31, such as a Peltier device. The refrigeration unit 3 is able to receive one or more containers 32 including liquid concentrate that is to be used to produce the drink. A typical example of liquid concentrate is liquid coffee concentrate that is mixed with hot water to produce coffee. The liquid concentrate is kept cool to maintain its quality, and therefore to maintain the high quality of the beverage produced. Typically, the refrigeration unit 3 cools the liquid concentrate to, or maintains this at, a temperature of about 6°C.

The refrigeration unit 3 includes a pump 33, such as a peristaltic pump, to pump a volume of the liquid concentrate along pipe 34 to an outlet 19 in the dispenser unit 1. The pump 33 is also controlled by control electronics, which are in turn controlled by the user switch such as the lever 16.

In use, hot water is continually provided to the dispenser unit 1, normally passing through valves 13, 15 and returning to the heater tank 25. The liquid concentrate supply pipe 34 is filled with liquid concentrate for producing the beverage. On actuation of a switch, for example on turning or pulling lever 16, the control electronics of the system actuates the peristaltic pump 33 for a predetermined period at a predetermined speed to cause a predetermined volume of liquid concentrate to be dispensed through the outlet 19 into a mixing chamber 10. At the same time, a control signal is produced to energise the solenoid 12, thereby lifting the valve 13 from the valve seat 17 and allowing hot water to pass into the mixing chamber. The valve 13 may be opened either for a predetermined period to dispense a predetermined volume of hot water, or may remain open until the switch 16 is de-activated.

In the mixing chamber 10, the liquid concentrate and hot water are mixed, and are discharged through the lower opening of the mixing chamber 10 into a cup or other drinking receptacle 20. The mixing chamber 10 is a funnel shaped container with a lower opening. This shape ensures mixing of the liquid concentrate and hot water to produce the beverage.

In some cases, it may not be desired to mix liquid concentrate and hot water, and it may instead be desired merely to dispense hot water. This may be useful where beverages other than coffee are to be produced, for example tea, in which case the cup 20 may be filled with hot water to which a tea bag may be added. In this case, the control electronics operate in response to another switch (not shown) to actuate solenoid 14 to lift the valve 15 from the valve seat 18, thereby dispensing hot water through outlet 11. By having a separate outlet 11 for hot water, this ensures there will be no contamination of the dispensed water with any residue from the mixing chamber 10.

The control electronics may also control the amount of liquid concentrate dispensed by the pump 33. For example, a user may input a desired strength of the beverage, and based on this input, for example through a keypad, the speed or duration of actuation of the pump 33 may be varied to give the desired strength of beverage. Other input means for controlling the type, volume, strength or temperature of the dispensed beverage may be provided, and used to control the supply of ingredients to produce the beverage.

It is preferable for the refrigeration unit 3 to contain a number of different containers of liquid concentrate 32, each with an associated pump 33 and supply pipe 34 to the dispenser unit 1. In this way, a user may select which of the liquid concentrates is to be used for producing the beverage, for example by a suitable input through a keypad, or by actuation of an appropriate switch. This allows the option of different beverages to be produced by the apparatus.

In addition, it is possible to provide other units from which liquid can be supplied, through appropriate pipes, either to be discharged into the mixing chamber 10, or through a separate nozzle directly into the beverage receptacle. This may include units for the provision of milk that can be discharged directly into the beverage receptacle, for example to allow the production of milk containing drinks or cappuccino. Other examples of unit may include one for supplying whisky for the formation of Irish coffee.

Examples of liquid concentrate, in addition to coffee, may include soups and hot chocolate.

## Claims

1. A beverage dispensing apparatus comprising a dispenser unit (1) arranged to be mounted on a surface, a source of hot water for supplying hot water (2) to the dispenser unit, and a source of liquid concentrate (3) for supplying liquid concentrate to the dispenser unit (1), in which hot water and liquid concentrate are supplied to the dispenser unit and are mixed in the dispenser unit (1) to produce a beverage, the beverage being dispensed from the dispenser unit, **characterised in that** said sources of hot water and liquid concentrate are remote from the dispenser unit.

2. A beverage dispensing apparatus according to Claim 1, in which the water in the dispenser unit is maintained at the desired temperature for production of the beverage.

3. A beverage dispensing apparatus according to Claim 2, in which water is circulated through the dispenser unit from the source of hot water, thereby providing a supply of hot water at the desired temperature to the dispenser unit.

4. A beverage dispensing apparatus according to Claim 3, in which the dispenser unit includes a by-pass valve to control the recirculation of hot water through the source of hot water and the dispenser unit.

5. A beverage dispensing apparatus according to Claim 3 or 4, in which a restriction is provided in the return from the dispenser unit to the source of heated water.

6. A beverage dispensing apparatus according to Claim 5, in which the restriction is adjustable to control the pressure in the system.

7. A beverage dispensing apparatus according to any one of the preceding claims, in which the dispensing unit includes a plurality of hot water outlets.

8. A beverage dispensing apparatus according to Claim 7, in which at least one of the outlets is provided to discharge hot water into a mixing chamber where the water is mixed with the liquid concentrate to produce the beverage.

9. A beverage dispensing apparatus according to any one of the preceding claims, in which the temperature of the source of hot water is controlled such that the water delivered to the dispensing unit, is at a predetermined, desired, temperature.

10. A beverage dispensing apparatus according to any one of the preceding claims, in which the supply of liquid concentrate to the dispenser unit is controlled to control the volume of liquid concentrate supplied to the dispenser system.

11. A beverage dispensing apparatus according to any one of the preceding claims, in which a number of different liquid concentrates are provided, any one of which can be supplied to the dispenser unit in response to an operator input.

12. A beverage dispensing apparatus according to any one of the preceding claims, in which a source of at least one other liquid or solid additive is provided for addition to the beverage.

13. A beverage dispensing apparatus according to any one of the preceding claims, in which the liquid concentrate is a coffee concentrate.

## Patentansprüche

1. Ein Getränkespendergerät, das eine Spendereinheit (1), die zur Montage auf eine Oberfläche angeordnet ist, eine Quelle heißen Wassers für die Zuführung von Heißwasser (2) zur Spendereinheit und eine Quelle flüssigen Konzentrats (3) für die Zuführung von flüssigem Konzentrat zur Spendereinheit (1) umfasst, in der heißes Wasser und flüssiges Konzentrat der Spendereinheit zugeführt und in der Spendereinheit (1) vermischt werden, um ein Getränk zu produzieren, wobei das Getränk ab der Spendereinheit ausgegeben wird, **dadurch gekennzeichnet, dass** sich besagte Quellen heißen Wassers und flüssigen Konzentrats fern der Spendereinheit befinden.

2. Ein Getränkespendergerät nach Anspruch 1, in dem das Wasser in der Spendereinheit auf der gewünschten Temperatur zum Produzieren des Getränks gehalten wird.

3. Ein Getränkespendergerät nach Anspruch 2, in dem Wasser ab der Quelle heißen Wassers durch die Spendereinheit zirkuliert wird, und dadurch der Spendereinheit eine Zufuhr heißen Wassers mit der gewünschten Temperatur bereitgestellt wird.

4. Ein Getränkespendergerät nach Anspruch 3, in dem die Spendereinheit ein Umgehungsventil einschließt, um die Rezirkulation von heißem Wasser durch die Quelle heißen Wassers und die Spendereinheit zu steuern.

5. Ein Getränkespendergerät nach Anspruch 3 oder 4, in dem eine Verengung in der Rückleitung von der Spendereinheit zur Quelle heißen Wassers bereitgestellt ist.

6. Ein Getränkespendergerät nach Anspruch 5, in dem die Verengung einstellbar ist, um den Druck im System zu steuern.

7. Ein Getränkespendergerät nach einem beliebigen der vorhergehenden Ansprüche, in dem die Spendereinheit eine Vielheit von Heißwasserauslässen einschließt.

8. Ein Getränkespendergerät nach Anspruch 7, in dem wenigstens einer der Auslässe bereitgestellt ist, Heißwasser in eine Mischkammer zu entleeren wo das Wasser mit dem flüssigen Konzentrat vermischt wird, um das Getränk zu produzieren.

9. Ein Getränkespendergerät nach einem beliebigen der vorhergehenden Ansprüche, in dem die Temperatur der Quelle heißen Wassers so gesteuert wird, dass das der Spendereinheit zugeführte Wasser einer vorbestimmten, gewünschten Temperatur ist.

10. Ein Getränkespendergerät nach einem beliebigen der vorhergehenden Ansprüche, in dem die Zufuhr des flüssigen Konzentrats zur Spendereinheit gesteuert wird, um das der Spendereinheit zugeführte Volumen des flüssigen Konzentrats zu steuern.

11. Ein Getränkespendergerät nach einem beliebigen der vorhergehenden Ansprüche, in dem eine Zahl verschiedener flüssiger Konzentrate bereitgestellt ist, von denen jedes beliebige der Spendereinheit, als Reaktion auf eine Bedienereingabe, zugeführt werden kann.

12. Ein Getränkespendergerät nach einem beliebigen der vorhergehenden Ansprüche, in dem eine Quelle von wenigstens einem anderen flüssigen oder festem Zusatzmittel zum Hinzufügen zum Getränk bereitgestellt ist.

13. Ein Getränkespendergerät nach einem beliebigen der vorhergehenden Ansprüche, in dem das flüssige Konzentrat ein Kaffeekonzentrat ist.

## Revendications

1. Appareil distributeur de boisson comportant un distributeur (1) disposé de telle manière à être monté sur une surface (2), une source d'eau chaude destinée à envoyer de l'eau chaude dans le distributeur, et une source de concentré liquide (3) destinée à envoyer du concentré liquide dans le distributeur (1), dans lequel l'eau chaude et le concentré liquide sont envoyés dans le distributeur et sont mélangés dans le distributeur (1) pour produire une boisson, la boisson étant distribuée en provenance du distributeur, **caractérisé en ce que** lesdites sources d'eau chaude et de concentré liquide se trouvent à distance du distributeur.

2. Appareil distributeur de boisson selon la revendication 1, dans lequel l'eau se trouvant dans le distributeur est maintenue à la température souhaitée pour la production de la boisson.

3. Appareil distributeur de boisson selon la revendication 2, dans lequel l'eau est circulée dans le distributeur en provenance de la source d'eau chaude pour fournir ainsi au distributeur une alimentation en eau chaude à la température souhaitée.

4. Appareil distributeur de boisson selon la revendication 3, dans lequel le distributeur comprend un robinet de dérivation destiné à contrôler la recirculation de l'eau chaude dans la source d'eau chaude et le distributeur.

5. Appareil distributeur de boisson selon la revendication 3 ou la revendication 4, dans lequel un étranglement est prévu dans le retour en provenance du distributeur vers la source d'eau chauffée.

6. Appareil distributeur de boisson selon la revendication 5, dans lequel l'étranglement est réglable pour contrôler la pression dans le système.

7. Appareil distributeur de boisson selon l'une quelconque des revendications précédentes, dans lequel le distributeur comprend une pluralité de sorties d'eau chaude.

8. Appareil distributeur de boisson selon la revendication 7, dans lequel au moins une des sorties est prévue pour décharger de l'eau chaude dans une chambre de mélange où l'eau est mélangée au concentré liquide pour produire la boisson.

9. Appareil distributeur de boisson selon l'une quelconque des revendications précédentes, dans lequel la température de la source d'eau chaude est contrôlée de telle manière que l'eau envoyée au distributeur est à une température souhaitée prédéterminée.

10. Appareil distributeur de boisson selon l'une quelconque des revendications précédentes, dans lequel l'alimentation du concentré liquide au distributeur est contrôlée pour contrôler le volume de concentré liquide envoyé au système du distributeur.

11. Appareil distributeur de boisson selon l'une quelconque des revendications précédentes, dans lequel un certain nombre de différents concentrés liquides sont prévus, n'importe lequel d'entre eux pouvant être envoyé au distributeur en réaction à l'entrée d'un opérateur.

12. Appareil distributeur de boisson selon l'une quelconque des revendications précédentes, dans lequel une source d'au moins un autre additif liquide ou solide est prévue pour ajout dans la boisson.

13. Appareil distributeur de boisson selon l'une quelconque des revendications précédentes, dans lequel le concentré liquide est un concentré de café.
